# EUROPEAN PATENT APPLICATION

(11) **EP 2 916 497 A1**
(43) Date of publication of application: **09.09.2015**
(21) Application number: 13851406.2
(22) Date of filing: 30.10.2013
(51) Int. Cl.: H04L 12/713, H04L 12/717

(54) **COMMUNICATION SYSTEM, PATH INFORMATION EXCHANGE DEVICE, COMMUNICATION NODE, TRANSFER METHOD FOR PATH INFORMATION AND PROGRAM**

(30) Priority: 31.10.2012 JP 2012240975
(71) Applicant: NEC Corporation, Tokyo 108-8001 (JP)
(72) Inventor: SUZUKI, Kazuya, Tokyo 108-8001 (JP)
(74) Representative: Robson, Aidan John
(86) International application number: PCT/JP2013/079352
(87) International publication number: WO 2014/069502

(57) **Abstract**

The invention reduces load on a controller (control apparatus) accompanying propagation of path information when a centrally controlled network and an existing network are connected. A communication system is provided with: a plurality of communication nodes; a control apparatus that controls the plurality of communication nodes based on path information collected using an internal border gateway protocol; and a path information processing apparatus that is provided with: a first path information processing unit that receives, via communication node(s) connected to an other autonomous system, among the plurality of communication nodes, path information from the other autonomous system using an external border gateway protocol, and a second path information processing unit that reports the path information received by the first path information processing unit to the control apparatus using an internal border gateway protocol.

## Description

### TECHNICAL FIELD

### [CROSS-REFERENCE TO RELATED APPLICATIONS]

The present application claims priority from Japanese Patent Application No. 2012-240975 (filed on October 31, 2012), the content of which is hereby incorporated in its entirety by reference into this specification. The present invention relates to a communication system, a path information exchange apparatus, a communication node, a forwarding method for path information, and a program, and in particular to a communication system, a path information exchange apparatus, a communication node, a forwarding method for path information, and a program, which exchange path information with another autonomous system.

### BACKGROUND ART

In recent years, technology known as OpenFlow has been proposed (see Non-Patent Literature 1 and 2). In OpenFlow communication is taken as end-to-end flow, and path control, failure recovery, load balancing, and optimization are performed on a per-flow basis. An OpenFlow switch as specified in Non-Patent Literature 2 is provided with a secure channel for communication with an OpenFlow controller, and operates according to a flow table in which addition or rewriting is instructed as appropriate by the OpenFlow controller. In the flow table, for each flow there are definitions of sets of match conditions (Match Fields) for collation with packet headers, flow statistical information (Counters), and instructions (Instructions) that define processing content (refer to "4.1 Flow Table" in Non Patent Literature 2).

For example, when an OpenFlow switch receives a packet, a search is made for an entry having a match condition (refer to "4.3 Match Fields" in Non-Patent Literature 2) that matches header information of the received packet, from the flow table. As a result of the search, in a case where an entry matching the received packet is found, the OpenFlow switch updates the flow statistical information (Counters) and also implements processing content (packet transmission from a specified port, flooding, dropping, and the like) described in an Instructions field of the entry in question, for the received packet. On the other hand, as a result of the search, in a case where an entry matching the received packet is not found, the OpenFlow switch transmits a request for entry setting to the OpenFlow controller via the secure channel, that is, a request to transmit control information for processing the received packet. The OpenFlow switch receives a flow entry determined by processing content and updates the flow table. In this way, the OpenFlow switch performs packet forwarding using entries stored in the flow table as control information.

### CITATION LIST

### NON PATENT LITERATURE

[NPL 1]
   Nick McKeown and seven other authors, "OpenFlow: Enabling Innovation in Campus Networks", [online], [Search performed on October 24, 2012], Internet <URL: http://www.openflow.org/documents/openflow-wp-latest.pdf>
[NPL 2]
   "Openflow Switch Specification" Version 1.1.0. Implemented (Wire Protocol 0x02), [online], [Searched on October 24, 2012], Internet <URL:http://www.openflow.org/documents/openflow-spec-v1.1.0.pdf>

### SUMMARY OF INVENTION

### TECHNICAL PROBLEM

The following analysis is given according to the present invention. When an OpenFlow network of the abovementioned Non-Patent Literature 1 and 2 is connected to an existing network, there is a problem with regard to how to propagate path information.

In a wide area network as represented by the Internet, path information is propagated in so-called AS (Autonomous System) units. A border gateway protocol (below, "BGP") is used in propagation of path information in these AS units. It is to be noted that the BGP includes an eBGP (External BGP) used between ASs, and an iBGP (Internal BGP) used in propagation of path information within an AS (among speakers with the same AS number). For both of these, basic operations of exchanging messages by establishing a TCP session are the same, but in the external BGP there is a restriction in that speakers forming BGP peers must be connected by a direct link. On the other hand, in the iBGP a restriction like this does not exist, and for example, it is possible to have full mesh connections for BGP speakers or connections that use route reflectors or confederations. Meanwhile, in the iBGP, since loop detection by AS number is not possible, a loop prevention function such as split horizon is added.

In a case where the abovementioned OpenFlow network is connected to an existing network, for example, BGP protocol processing may be performed by an OpenFlow controller performing path calculation between OpenFlow switches, and path information exchanged.

However, since the eBGP, as described above, relates to a system in which BGP speakers (OpenFlow controller and adjacent AS router) establish a TCP session and exchange messages, load on the controller is a problem. For example, in a general AS that is a collection of routers or an IP network, in a case where a configuration with 100 edge nodes (BGP speakers) and 10 sessions established at each thereof is replaced by an OpenFlow network, the OpenFlow controller must establish 1000 TCP sessions.

It is an object of the present invention to provide a communication system, a path information exchange apparatus, a communication node, a forwarding method for path information, and a program, which can contribute to reduction in load on a controller (control apparatus) accompanying propagation of path information in a case where an existing network is connected to a centrally controlled network as represented by an OpenFlow network of Non-Patent Literature 1 and 2.

### SOLUTION TO PROBLEM

According to a first aspect there is provided a communication system having: a plurality of communication nodes; a control apparatus that controls the plurality of communication nodes based on path information collected using an internal border gateway protocol; and a path information processing apparatus that is provided with: a first path information processing unit that receives, via communication node(s) connected to an other autonomous system, among the plurality of communication nodes, path information from the other autonomous system using an external border gateway protocol, and a second path information processing unit that reports the path information received by the first path information processing unit to the control apparatus using an internal border gateway protocol.

According to a second aspect there is provided a path information processing apparatus, in a communication system including a plurality of communication nodes and a control apparatus that controls the plurality of communication nodes based on path information collected using an internal border gateway protocol, the path information processing apparatus being connected to a communication node connected to an other autonomous system among the plurality of communication nodes; wherein the path information processing apparatus is provided with: a first path information processing unit that receives path information from the other autonomous system, using an external border gateway protocol, and a second path information processing unit that reports the path information received by the first path information processing unit to the control apparatus, using an internal border gateway protocol.

According to a third aspect there is provided a communication node having an entry storage unit that holds entries associating a match condition for collating a received packet and processing content to be applied to a packet that matches the match condition, and a path information processing apparatus provided with: a first path information processing unit that receives path information from the other autonomous system using an external border gateway protocol, and a second path information processing unit that reports the path information received by the first path information processing unit to the control apparatus, using an internal border gateway protocol.

According to a fourth aspect there is provided a forwarding method for path information in a path information processing apparatus in a communication system including a plurality of communication nodes and a control apparatus that controls the plurality of communication nodes based on path information collected using an internal border gateway protocol, the path information processing apparatus being built into or connected to a communication node connected to an other autonomous system among the plurality of communication nodes, the method having: a step of receiving path information from the other autonomous system using an external border gateway protocol; and a step of reporting the path information received by the first path information processing unit to the control apparatus using an internal border gateway protocol. This method is associated with a particular mechanism known as a path information processing apparatus that receives path information from another autonomous system.

According to a fifth aspect there is provided a program executed on a computer provided with a path information processing apparatus, in a communication system including a plurality of communication nodes and a control apparatus that controls the plurality of communication nodes based on path information collected using an internal border gateway protocol, the path information processing apparatus being built into or connected to a communication node connected to an other autonomous system among the plurality of communication nodes, the program executing: a process of receiving path information from the other autonomous system using an external border gateway protocol; and a process of reporting the path information received by the first path information processing unit to the control apparatus using an internal border gateway protocol. It is to be noted that this program may be recorded on a computer-readable (non-transient) storage medium. That is, the present invention may be embodied as a computer program product.

### ADVANTAGEOUS EFFECTS OF INVENTION

According to the present invention it is possible to contribute to reduction in load on a controller (control apparatus) accompanying propagation of path information, in a case where a centrally controlled network and an existing network are connected.

### BRIEF DESCRIPTION OF DRAWINGS

[Fig. 1]

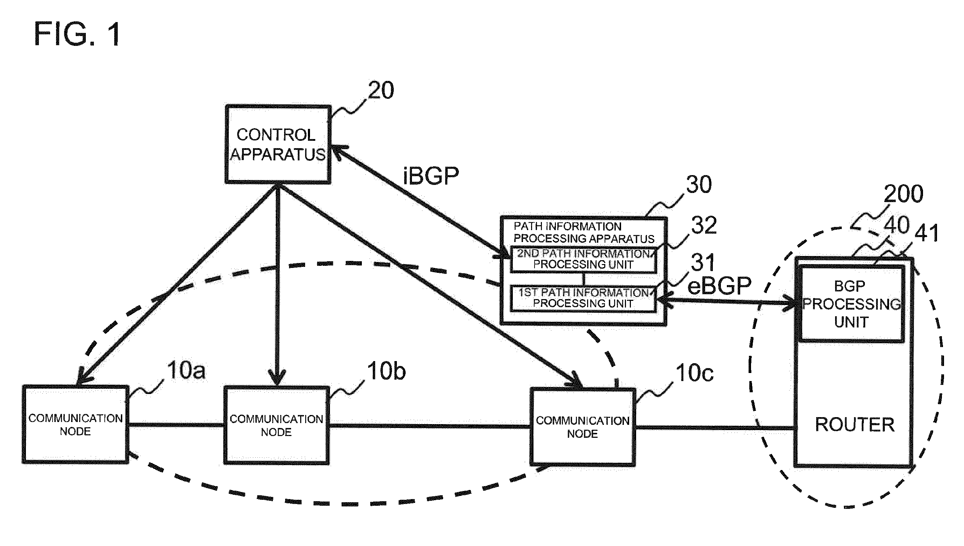

   FIG. 1 is a diagram showing a configuration of an exemplary embodiment of the present invention.
[Fig. 2]

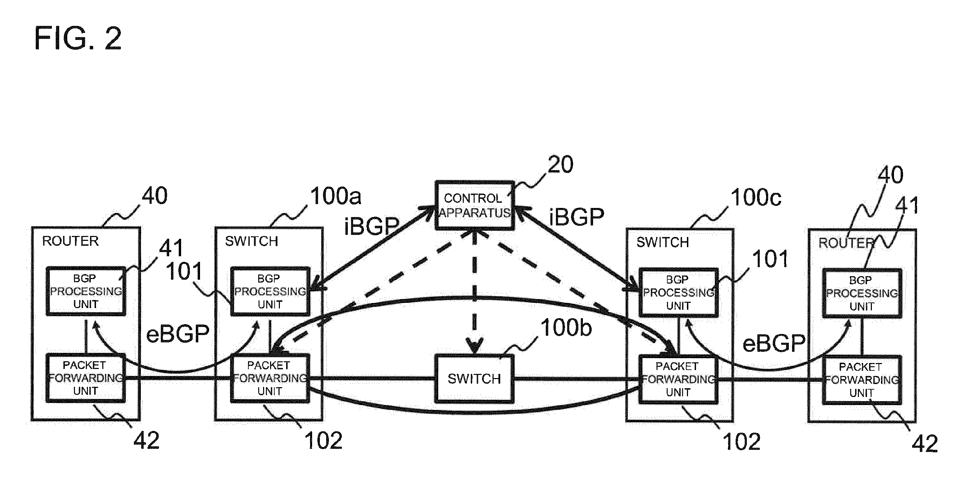

   FIG. 2 is a diagram showing a configuration of a communication system in a first exemplary embodiment of the invention.
[Fig. 3]

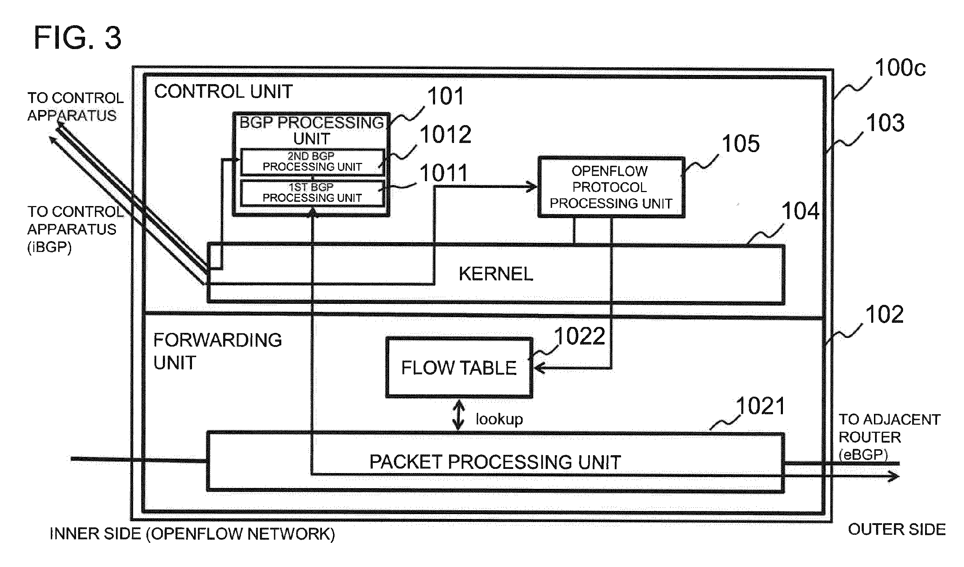

   FIG. 3 is a diagram showing a configuration of a switch in the first exemplary embodiment of the invention.
[Fig. 4]

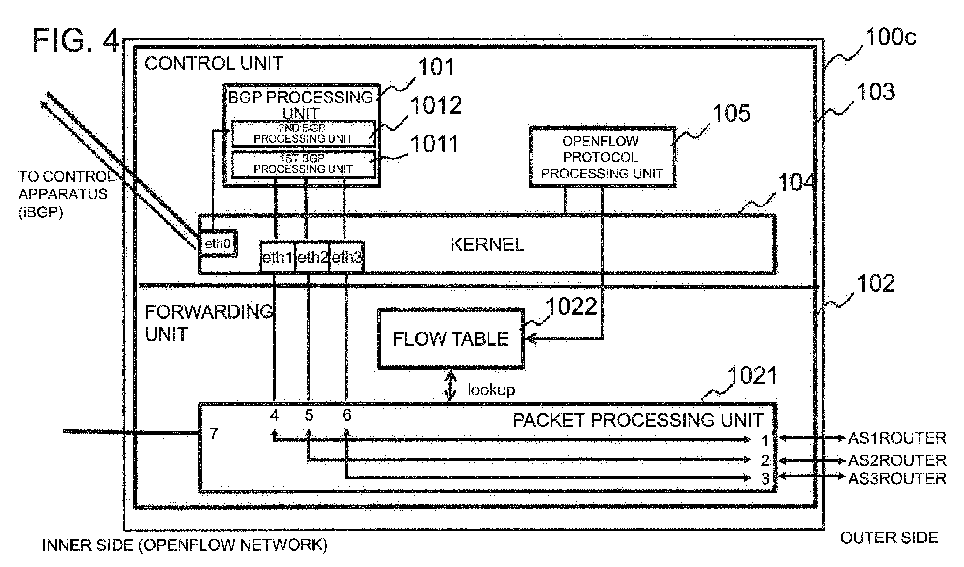

   FIG. 4 is a diagram for describing a packet forwarding operation in the switch of the first exemplary embodiment of the invention.
[Fig. 5]

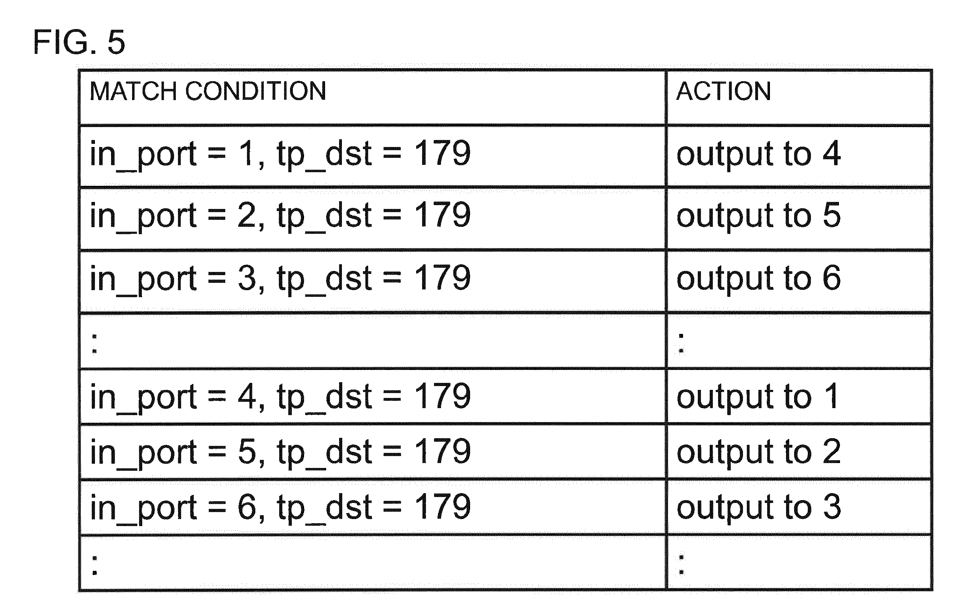

   FIG. 5 is an example of flow entries set in a flow table of the switch of the first exemplary embodiment of the invention.
[Fig. 6]

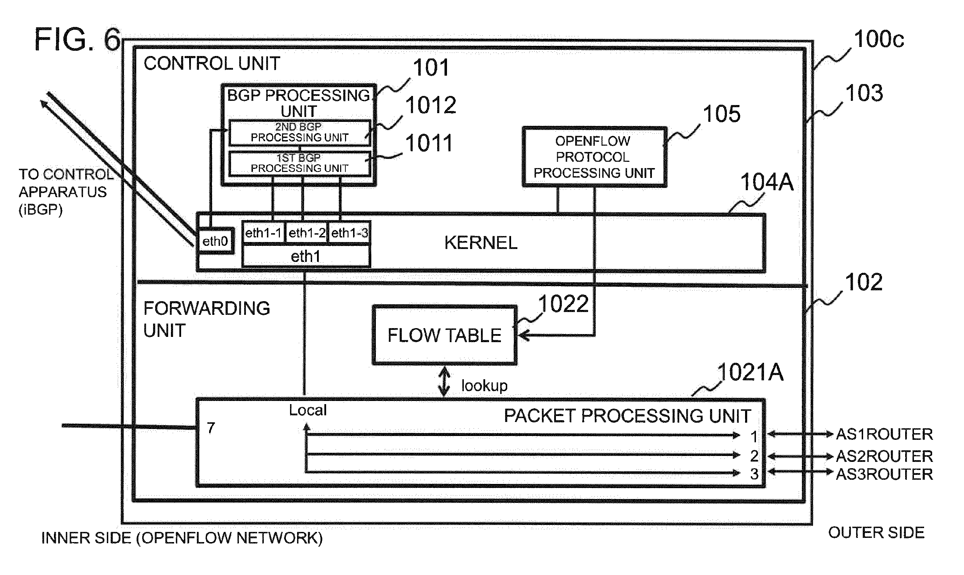

   FIG. 6 is a diagram for describing a packet forwarding operation in a switch of a second exemplary embodiment of the invention.
[Fig. 7]

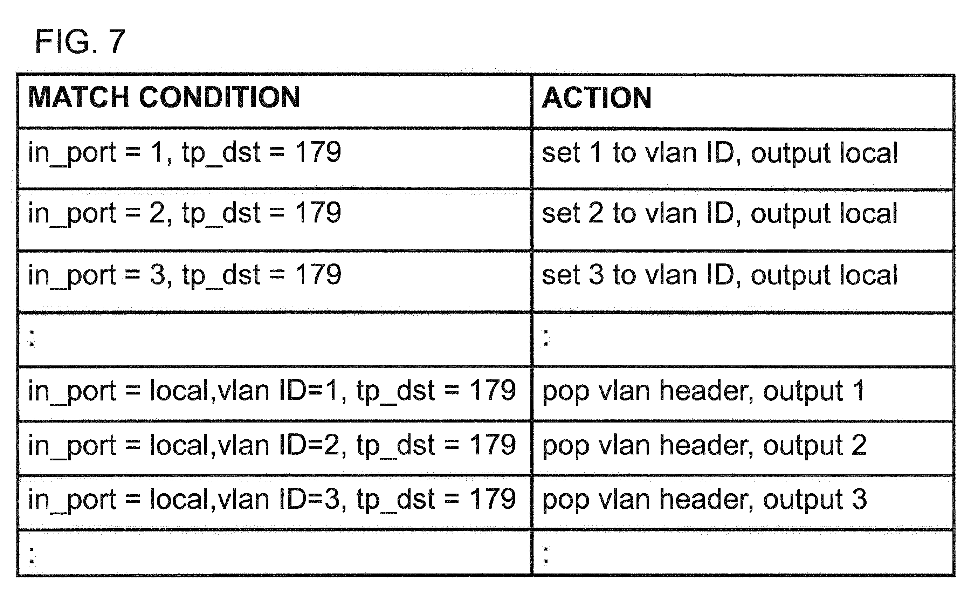

   FIG. 7 is an example of flow entries set in a flow table of the switch of the second exemplary embodiment of the invention.

### DESCRIPTION OF EMBODIMENTS

First, a description is given of an outline of exemplary embodiments of the present invention, making reference to the drawings. It is to be noted that reference symbols in the drawings attached to this outline are added to respective elements for convenience, as an example in order to aid understanding, and are not intended to limit the present invention to modes illustrated in the drawings.

The present invention, in an exemplary embodiment thereof as shown in FIG. 1, can be implemented in a configuration provided with a plurality of communication nodes 10a to 10c, a control apparatus 20 that controls the plurality of communication nodes 10a to 10c, and a path information processing apparatus 30. An other autonomous system 200 is a collection of routers or a network not belonging to an autonomous system to which the communication nodes 10a to 10c belong: for example, a collection of routers or a network to which a management policy is applied, separate from the autonomous system to which the communication nodes 10a to 10c belong. In the example of FIG. 1, one other autonomous system 200 is shown, but a plurality thereof is also possible.

Specifically, the path information processing apparatus 30 is provided with a first path information processing unit 31 and a second path information processing unit 32. The first path information processing unit 31 receives, via the communication node 10c that is connected to the other autonomous system 200, among the plurality of communication nodes 10a to 10c, path information from a BGP processing unit 41 of a router 40 of the other autonomous system, using an external border gateway protocol (eBGP). The second path information processing unit 32 reports the path information received by the first path information processing unit 31 to the control apparatus 20, using an internal border gateway protocol (iBGP). The control apparatus 20 controls the plurality of communication nodes 10a to 10c, based on the path information collected using the internal border gateway protocol.

By the above type of arrangement, it is possible to reduce load on the control apparatus 20 accompanying propagation of path information, when a centrally controlled network and an existing network are connected. A reason for this is that a configuration is employed wherein, without the control apparatus 20 establishing eBGP peers and receiving path information from all adjacent autonomous systems, the path information processing apparatus 30 connected to adjacent autonomous systems receives path information from the adjacent autonomous systems and reports content thereof to the control apparatus 20.

### [FIRST EXEMPLARY EMBODIMENT]

Next, a detailed description is given concerning a first exemplary embodiment of the present invention, making reference to the drawings. FIG. 2 is a diagram showing a configuration of a communication system in the first exemplary embodiment of the invention. FIG. 2 illustrates: switches 100a, 100b and 100c corresponding to communication nodes described above; an OpenFlow network configured to include a control apparatus 20 that controls these switches 100a, 100b and 100c; and autonomous system routers 40 adjacent to the OpenFlow network. It is to be noted that dashed lines in FIG. 2 represent control channels, and solid lines represent data channels.

Each of the switches 100a, 100b and 100c is a switch that satisfies the OpenFlow specification of Non-Patent Literature 2. Among these, switch 100a and switch 100c, which are connected to adjacent autonomous system routers 40, are provided with a BGP processing unit 101. Detailed configurations of the switches 100a and 100c are described later using FIG. 3 to FIG. 5.

The control apparatus 20 receives path information by an iBGP from the switches 100a and 100c, and based on a result thereof, determines a communication path between a terminal or server connected to the switches 100a to 100c, and adjacent autonomous system nodes. The control apparatus 20 can be implemented in a configuration in which BGP functionality is added to an OpenFlow controller of Non-Patent Literature 1 and 2.

The router 40 is provided with a BGP processing unit 41 that performs propagation of path information using an eBGP, and a packet forwarding unit 42 that refers to a routing table and forwards packets.

FIG. 3 is a diagram showing a configuration of the switch 100c in the first exemplary embodiment of the invention. Referring to FIG. 3, the switch 100c is provided with a control unit 103 and a forwarding unit 102.

The forwarding unit 102 is provided with a flow table 1022 configured by Content Addressable Memory (CAM) or the like, and a packet processing unit 1021 that searches for an entry having a match condition that matches a packet received from the flow table 1022, and performs packet forwarding or the like by executing processing content (action) set in the entry.

The control unit 103 is provided with a BGP processing unit 101 that processes BGP messages forwarded from the packet processing unit 1021, an OpenFlow protocol processing unit 105 that performs communication using the OpenFlow protocol of Non-Patent Literature 2 with the control apparatus 20, and a kernel 104 that relays communication between the forwarding unit 102 and the BGP processing unit 101 and the OpenFlow protocol processing unit 105, in addition to process management and resource management.

The BGP processing unit 101 is provided with a first BGP processing unit 1011 corresponding to the first path information processing unit 31 described above, and a second BGP processing unit 1012 corresponding to the second path information processing unit 32 described above.

The first BGP processing unit 1011 communicates by the eBGP with a transmission source of a BGP message. More specifically, the first BGP processing unit 1011 organizes the BGP message (UPDATE) from a packet forwarded from the packet processing unit 1021, obtains path information, and forwards to the second BGP processing unit 1012. It is to be noted that, while omitted in the present exemplary embodiment, the first BGP processing unit 1011 may propagate path information on an OpenFlow network side received from the second BGP processing unit 1012 to an adjacent router.

The second BGP processing unit 1012 communicates by the iBGP with a transmission source of a BGP message. More specifically, the second BGP processing unit 1012 forwards path information received from the first BGP processing unit 1011 to the control apparatus 20. It is to be noted that, while omitted in the present exemplary embodiment, the second BGP processing unit 1012, in a case of receiving path information of the OpenFlow network side received from the control apparatus 20, may forward the path information to the first BGP processing unit 1011 and propagate to an adjacent router.

It is to be noted that the abovementioned first BGP processing unit 1011 and the second BGP processing unit 1012 can also be implemented by a computer program that executes processing of the BGP processing unit described above, on a computer configuring the control unit of the switch 100c, using hardware thereof.

It is to be noted that since the second BGP processing unit 1012 and the control apparatus 20 communicate by the iBGP, they need not necessarily be physically connected. For example, it is possible to establish a plurality of sessions between the second BGP processing unit 1012 and the control apparatus 20, and to provide redundancy. It is also possible to provide redundancy with regard to a BGP processing unit (BGP speaker) on the control apparatus 20 side, to configure a full mesh or the like.

In the example of FIG. 3, the switch 100c is described, but a similar configuration is also possible for the switch 100a.

Next, with regard to the present exemplary embodiment, a description is given concerning a mechanism in which the packet processing unit 1021 makes the BGP processing unit 101 identify an autonomous system that is a packet transmission origin. FIG. 4 is a diagram for describing an operation of relaying packets within a switch in the first exemplary embodiment of the present invention.

Numerals 1 to 7 within a block indicating the packet processing unit 1021 of FIG. 4 represent numbers of local ports for forwarding packets to the kernel 104 inside a switch, or physical ports. In the kernel 104, eth1 to eth3 relate to kernel interface, and IP addresses are set for BGP terminals in each thereof. In the kernel 104, eth0 indicates a connection interface with the control apparatus 20.

FIG. 5 is a diagram showing an example of flow entries for implementing packet forwarding among ports shown by two-arrowed lines in the block indicating the packet processing unit 1021 in FIG. 4. For example, in a case of receiving a packet with a TCP/UDP destination port number of 179 (tp_dst=179), from port number 1 (in_port=1), there is a hit with a match condition of the topmost entry in FIG. 5, and the packet is outputted from port 4. The packet outputted from port 4 is received at interface eth1 of the kernel 104, and is inputted to the first BGP processing unit 1011. A response from the first BGP processing unit 1011 is outputted from interface eth1 of the kernel 104 and forwarded to port 4. Since there is a hit with a match condition of the fourth entry from the top in FIG. 5, the packet received at port 4 is outputted from port 1, and is forwarded to a router of a first autonomous system (AS1).

As described above, an eBGP session is established between the first BGP processing unit 1011 and adjacent autonomous systems (AS1 to AS3), and propagation of path information is performed. The path information inputted from the first BGP processing unit 1011 is transmitted to the control apparatus 20 by the iBGP, by the second BGP processing unit 1012. Thus, without terminating the respective eBGP sessions, the control apparatus 20 can obtain path information of adjacent autonomous systems.

It is to be noted that with regard to the flow entries shown in FIG. 5, the control apparatus 20 may performing setting, or a network administrator may perform a setting using a command line interface or the like provided in a switch. In all cases, by referring to settings of the respective switch ports, routers to which they are connected, and interfaces of the kernel 104, setting is performed so that the interfaces of the kernel 104 and ports connected to adjacent autonomous systems correspond 1 to 1.

As described above, according to the present exemplary embodiment, even without the control apparatus 20 directly terminating the eBGP, it is possible to obtain path information of an adjacent autonomous system via a switch provided with the BGP processing unit 101. Since the iBGP is used, it is not necessary to physically connect between the control apparatus 20 and the BGP processing unit 101. Consequently, it is possible to provide redundancy with regard to forwarding path in path information between the control apparatus 20 and the BGP processing unit 101.

### [SECOND EXEMPLARY EMBODIMENT]

Next, a description is given concerning a second exemplary embodiment of the present invention in which a change is added to the mechanism whereby a packet processing unit 1021 makes a BGP processing unit 101 identify an autonomous system that is a packet transmission origin. Since the second exemplary embodiment can be implemented by a configuration that is roughly the same as the first exemplary embodiment, the description given below centers on differences from the first exemplary embodiment.

FIG. 6 is a diagram for describing a packet forwarding operation in a switch of the second exemplary embodiment of the invention. A point of difference from FIG. 4 is that local ports 4 to 6 for forwarding packets to a kernel 104A of a packet processing unit 1021A are integrated into 1 local port "Local". A further point is that interfaces of the kernel 104A become one interface eth1, and the kernel 104A determines from which interface among interfaces eth1-1 to 1-3 corresponding to ports 1 to 3, a packet is forwarded to the first BGP processing unit 1101, based on a VLAN ID attached to a received packet.

FIG. 7 is a diagram showing an example of flow entries for implementing packet forwarding among ports shown by two-arrowed lines in the block indicating the packet processing unit 1021A in FIG. 6. For example, in a case of receiving a packet with a TCP/UDP destination port number of 179 (tp_dst=179) from port number 1 (in_port=1), there is a hit with a match condition of the topmost entry in FIG. 5, and, on setting a VLAN ID field to "1", the packet is outputted from the local port "Local". When the packet with VLAN ID set to "1" that was outputted from the local port "Local" is received at the interface eth1 of the kernel 104, the packet is inputted to a first BGP processing unit 1011 as a packet received from port 1 corresponding to eth1-1 corresponding to port 1. A response from the first BGP processing unit 1011 is outputted from interface eth1 of the kernel 104 and forwarded to the local port "Local". Since there is a hit with a match condition of the fourth entry from the top in FIG. 7, the packet with VLAN ID of "1" received by the local port "Local", is outputted from port 1 after removal of a VLAN header, and is forwarded to a router of a first autonomous system (AS1).

As described above, in the present exemplary embodiment an eBGP session is established between the first BGP processing unit 1011 and adjacent autonomous systems (AS1 to AS3), and propagation of path information is performed. The path information inputted from the first BGP processing unit 1011 is transmitted to the control apparatus 20 by the iBGP, by the second BGP processing unit 1012. Thus, without terminating the respective eBGP sessions, the control apparatus 20 can obtain path information of adjacent autonomous systems.

It is to be noted that in the exemplary embodiment described above a description has been given in which an autonomous system (adjacent router that establishes a session) is identified using VLAN ID, but information identifying the autonomous system may also be built into in another header field. For example, a set of a eBGP transmission source IP address and destination IP address is secured, and it is possible to rewrite the set of the transmission source IP address and destination IP address, and to perform processing in the BGP processing unit 101.

A description has been given above of respective exemplary embodiments of the present invention, but the present invention is not limited to the abovementioned exemplary embodiments, and modifications, substitutions and adjustments may be added within a scope that does not depart from fundamental technical concepts of the invention. For example, network configurations and element configurations shown in the respective drawings are exemplary, for the purpose of aiding understanding of the invention, and are not intended to limit the invention to configurations illustrated in the drawings.

In the abovementioned exemplary embodiment, a description was given citing an example in which the BGP processing units are disposed in the control unit within a switch, but a path information processing apparatus operating as a BGP processing unit to receive packets of BGP messages via a switch may also be provided individually.

In the abovementioned exemplary embodiments, a description was given citing an example in which the BGP processing unit 101 terminated only an EBGP session, but the BGP processing unit 101 may also be made to give an ARP (Address Resolution Protocol) response from another adjacent router. By so doing, it is possible to further reduce load on the control apparatus 20.

Finally, preferred modes of the present invention are summarized.

### [First Mode]

(Refer to the communication system according to the first aspect described above.)

### [Second Mode]

The communication system according to the first mode, wherein the path information processing apparatuses are juxtaposed, in communication nodes connected to an other autonomous system, among the communication nodes.

### [Third Mode]

The communication system according to the first or second mode, wherein the communication nodes are provided with an entry storage unit that holds entries associating a match condition for collating a received packet, and processing content to be applied to a packet matching the match condition, and wherein,
by setting an entry having a match condition for identifying a partner that receives path information, in the entry storage unit of the communication node(s) connected to the other autonomous system, an association is made between an interface provided in each partner in which the first path information processing unit receives the path information, and a port connected to a device of the partner that receives the path information, and packets are relayed.

### [Fourth Mode]

The communication system according to the first or second mode, wherein the communication nodes are provided with an entry storage unit that holds entries associating a match condition for collating a received packet and processing content to be applied to a packet matching the match condition, and wherein,
by setting, in the entry storage unit of the communication node(s) connected to the other autonomous system, an entry associating a match condition for identifying a partner that receives path information, and processing to add information for identifying the partner that receives the path information, in a header as the processing content, a session is established between the first path information processing unit and the partner that receives the path information.

### [Fifth Mode]

The communication system according to any one of the first to fourth modes, wherein
the first path information processing unit and the second path information processing unit are built into a communication node connected to the other autonomous system.

### [Sixth Mode]

(Refer to the path information processing apparatus according to the second aspect described above.)

### [Seventh Mode]

(Refer to the communication node according to the third aspect described above.)

### [Eighth Mode]

(Refer to the forwarding method for path information according to the fourth aspect described above.)

### [Ninth Mode]

(Refer to the program according to the fifth aspect described above.)

It is to be noted that the sixth to ninth modes described above may be expanded with regard to the second to fifth modes, similar to the first mode.

It is to be noted that the various disclosures of the abovementioned Non-Patent Literature are incorporated herein by reference thereto. Modifications and adjustments of exemplary embodiments and examples may be made within the bounds of the entire disclosure (including the scope of the claims) of the present invention, and also based on fundamental technological concepts thereof. Furthermore, various combinations and selections of various disclosed elements (including respective elements of the respective claims, respective elements of the respective exemplary embodiments and examples, respective elements of the respective drawings, and the like) are possible within the scope of the claims of the present invention. That is, the present invention clearly includes every type of transformation and modification that a person skilled in the art can realize according to the entire disclosure including the scope of the claims and to technological concepts thereof. In particular, with regard to numerical ranges described in the present specification, arbitrary numerical values or small ranges included in the relevant ranges should be interpreted to be specifically described even where there is no particular description thereof.

### REFERENCE SIGNS LIST

- 10a to 10c: communication node
- 20: control apparatus
- 30: path information processing apparatus
- 31: first path information processing unit
- 32: second path information processing unit
- 40: router
- 41: BGP processing unit
- 42: packet forwarding unit
- 200: other autonomous system
- 100a, 100b, 100c: switch
- 101: BGP processing unit
- 102: forwarding unit
- 103: control unit
- 104, 104A: kernel
- 105: OpenFlow protocol processing unit
- 1011: first BGP processing unit
- 1012: second BGP processing unit
- 1021, 1021A: packet processing unit
- 1022: flow table
- eth0 to eth3, eth1-1 to eth1-3: interface

## Claims

1. A communication system comprising:
a plurality of communication nodes;
a control apparatus that controls said plurality of communication nodes based on path information collected using an internal border gateway protocol; and
a path information processing apparatus comprising:
a first path information processing unit that receives, via communication node(s) connected to an other autonomous system, among said plurality of communication nodes, path information from said other autonomous system using an external border gateway protocol, and
a second path information processing unit that reports the path information received by said first path information processing unit to said control apparatus using an internal border gateway protocol.

2. The communication system according to claim 1 wherein a plurality of said path information processing apparatuses are juxtaposed, in communication nodes connected to an other autonomous system among said communication nodes.

3. The communication system according to claim 1 or 2, wherein
said communication nodes comprise an entry storage unit that holds entries associating a match condition for collating a received packet and processing content to be applied to a packet that matches said match condition, and wherein,
by setting an entry having a match condition for identifying a partner that receives path information, in said entry storage unit of said communication node(s) connected to said other autonomous system, an association is made between an interface provided in each partner in which said first path information processing unit receives the path information and a port connected to a device of the partner that receives the path information, and packets are relayed.

4. The communication system according to claim 1 or 2, wherein
said communication nodes comprise an entry storage unit that holds entries associating a match condition for collating a received packet and processing content to be applied to a packet that matches said match condition, and wherein,
by setting, in said entry storage unit of said communication node(s) connected to said other autonomous system, an entry associating a match condition for identifying a partner that receives path information, and processing to add information for identifying the partner that receives the path information, in a header as said processing content, a session is established between said first path information processing unit and the partner that receives the path information.

5. The communication system according to claim 3 or 4, wherein said first path information processing unit and said second path information processing unit are built into a communication node connected to said other autonomous system.

6. A path information processing apparatus, in a communication system including a plurality of communication nodes and a control apparatus that controls said plurality of communication nodes based on path information collected using an internal border gateway protocol, said path information processing apparatus being connected to a communication node connected to an other autonomous system among said plurality of communication nodes; wherein
said path information processing apparatus comprises:
a first path information processing unit that receives path information from said other autonomous system, using an external border gateway protocol, and
a second path information processing unit that reports the path information received by said first path information processing unit to said control apparatus, using an internal border gateway protocol.

7. A communication node comprising:
an entry storage unit that holds entries associating a match condition for collating a received packet and processing content to be applied to a packet that matches said match condition, and
a path information processing apparatus comprising:
a first path information processing unit that receives path information from said other autonomous system, using an external border gateway protocol, and
a second path information processing unit that reports the path information received by said first path information processing unit to said control apparatus, using an internal border gateway protocol.

8. The communication node according to claim 7, wherein an association is made, based on an entry having a match condition for identifying a partner that receives path information, as set in said entry storage unit, between an interface provided in each partner in which said first path information processing unit receives path information, and a port connected to a apparatus of the partner that receives the path information, and packets are relayed.

9. The communication node according to claim 7, wherein the partner that receives the path information is identified based on an entry associating a match condition for identifying a partner that exchanges path information, and processing to add information for identifying the partner that receives the path information in a header as said processing content, as set in said entry storage unit.

10. A forwarding method for path information in a path information processing apparatus, in a communication system including a plurality of communication nodes and a control apparatus that controls the plurality of communication nodes based on path information collected using an internal border gateway protocol, the path information processing apparatus being built into or connected to a communication node connected to an other autonomous system among said plurality of communication nodes, said method comprising
a step of receiving path information from said other autonomous system using an external border gateway protocol, and
a step of reporting the path information received by said first path information processing unit to said control apparatus using an internal border gateway protocol.

11. A program executed on a computer comprising a path information processing apparatus, in a communication system including a plurality of communication nodes and a control apparatus that controls said plurality of communication nodes based on path information collected using an internal border gateway protocol, the path information processing apparatus being built into or connected to a communication node connected to an other autonomous system among said plurality of communication nodes, the program executing
a process of receiving path information from said other autonomous system using an external border gateway protocol, and
a process of reporting the path information received by said first path information processing unit to said control apparatus using an internal border gateway protocol.
